# EUROPÄISCHE PATENTSCHRIFT

(11) **EP 1 272 578 B1**
(45) Veröffentlichungstag und Bekanntmachung des Hinweises auf die Patenterteilung: **19.10.2005**
(21) Anmeldenummer: 01933702.1
(22) Anmeldetag: 15.03.2001
(51) Int. Cl.: C09D 133/06, C09D 167/00, C08G 18/42, C08G 18/79

(54) **VERFAHREN ZUR HERSTELLUNG VON FARB- UND/ODER EFFEKTGEBENDEN MEHRSCHICHTLACKIERUNGEN AUF KRAFT FAHRZEUGKAROSSERIEN ODER TEILEN HIERVON**
METHOD FOR THE PRODUCTION OF COLOUR- AND/OR EFFECT-ENDOWING MULTICOAT PAINT ON VEHICLE CHASSIS OR PARTS THEREOF
PROCEDE POUR APPLIQUER DES REVETEMENTS MULTICOUCHES COLORES ET/OU A EFFET SUR DES CARROSSERIES OU DES PIECES DE VEHICULES AUTOMOBILES

(30) Priorität: 14.04.2000 DE 10018582
(43) Veröffentlichungstag der Anmeldung: 08.01.2003
(73) Patentinhaber: BASF Coatings AG, 48165 Münster (DE)
(72) Erfinder: WONNEMANN, Heinrich, 48291 Telgte (DE); AUSTRUP, Berthold, 59394 Nordkirchen (DE); HILGER, Christopher, 48165 Münster (DE); PIONTEK, Susanne, 48165 Münster (DE)
(74) Vertreter: Fitzner, Ulrich
(86) Internationale Anmeldenummer: PCT/EP2001/002923
(87) Internationale Veröffentlichungsnummer: WO 2001/079367

(56) Entgegenhaltungen:
- EP-A- 0 322 834
- WO-A-00/12579
- WO-A-00/12625
- WO-A-97/30796
- GB-A- 2 244 060
- DATABASE WPI Section Ch, Week 199944 Derwent Publications Ltd., London, GB; Class A21, AN 1999-522915 XP002175211 & JP 11 228866 A (DAINIPPON INK & CHEM INC), 24. August 1999 (1999-08-24)

## Beschreibung

Die vorliegende Erfindung betrifft ein neues Verfahren zur Herstellung von farb- und/oder effektgebenden Mehrschichtlackierungen auf Kraftfahrzeugkarosserien oder Teilen hiervon.

Die Verwendung von Pulverlacken zur Herstellung von Steinschlagschutzgrundierungen und Füllerlackierungen im Rahmen von farb- und/oder effektgebenden Mehrschichtlackierungen für die Kraftfahrzeugerstlackierung, insbesondere die PKW-Erstlackierung (OEM), ist bekannt (vgl. beispielsweise Coatings Partner, The magazine of BASF, Powder Coatings Special, 1/2000, Seiten 4 bis 6). In dieser Anwendung wird der Pulverlack üblicherweise auf eine kathodisch abgeschiedene und thermisch gehärtete Elektrotauchlackierung appliziert und separat eingebrannt. Oder aber der Pulverlack wird auf die nicht oder nur partiell gehärtete Elektrotauchlackschicht aufgetragen und gemeinsam mit dieser gehärtet (vgl. die Patentanmeldungen DE 196 06 706 A 1 oder EP 0 646 420 A 1). Die Anordnung aus Elektrotauchlackierung und Pulverlackierung wird häufig auch als Grundierung oder Primerschicht bezeichnet. Diese wird im weiteren mit einer farb- und/oder effektgebenden Basislackschicht und einer Klarlackschicht überschichtet, die dann gemeinsam eingebrannt werden (Naß-in-naß-Verfahren). Die Grundierung kann aber auch mit einer Unidecklackschicht versehen werden, die dann separat eingebrannt wird, wodurch die Unidecklackierung resultiert.

In diesen modernen farb- und/oder effektgebende Mehrschichtlackierungen werden die Füller und Steinschlagschutzgrundierungen nicht mehr allein zu diesen "klassischen" Zwecken eingesetzt, sondern man versucht auch aus Gründen der Materialersparnis, die Farbtiefe und/oder den Farbton und/oder die optischen Effekte der Basislackierung oder der Unidecklackierung über die Füllerlackierung oder Steinschlagschutzgrundierung (mit) einzustellen und/oder zu variieren, so daß die Basislackierung oder Unidecklackierung in vielen Fällen gar nicht mehr vollständig deckend (vgl. Römpp Lexikon Lacke und Druckfarben, Georg Thieme Verlag, Stuttgart, New York, 1998, Seite 124: "Deckvermögen") appliziert werden muß.

Entsprechende pigmentierte Pulverlacke werden heutzutage häufig auf der Basis Epoxidharz/Polyester hergestellt. Diese Pulverlacke werden von der Fachwelt auch als Hybridpulver bezeichnet, weil hier zwei Bindemittelklassen in Mischung verarbeitet werden (vgl. die Firmenschrift von BASF Coatings AG "Pulverlacke, Pulverlacke für industrielle Anwendungen", Januar 2000). Für die vorstehend angegebene Verwendung weisen sie aber häufig nicht die erforderliche Witterungsstabilität auf, was sich durch Delamination und/oder Unterkreidung der Basislackierung oder der Unidecklackierung störend bemerkbar macht. Diese Probleme können aber die Anwendung der entsprechenden farb- und/oder effektgebenden Mehrschichtlackierungen gerade in der besonders anspruchsvollen und innovativen PKW-Erstlackierung erschweren oder verhindern.

Im Segment der Nutzfahrzeuglackierung, insbesondere der LKW-Lackierung, sind 50 bis 70% der Lackierungen von der unbunten Farbe Weiß. Für die Fensterrahmen wird dagegen häufig die unbunte Farbe Schwarz verwendet. LKW werden aus Gründen der Sicherheit und der Präsentation üblicherweise in kurzen Zeitabständen oder sogar täglich gewaschen. Zahlreiche LKW-Hersteller versuchen daher, mit einer Klarlackierung eine hohe Kratzfestigkeit zu erzielen, damit die Lackierungen durch die Waschbürsten in den Waschanlagen nicht zerkratzt werden. Es bietet sich daher für die Lackierung von Nutzfahrzeugen als kostengünstige Alternative zu den üblichen und bekannten farb- und/oder effektgebenden Mehrschichtlackierungen ein Lackaufbau aus einer farb- und/oder effektgebenden Pulverlackierung, beispielsweise einer weißen und/oder schwarzen Pulverlackierung, und einer Klarlackierung an.

Die vorstehend geschilderten Probleme, die mit der nicht ausreichenden Witterungsstabilität der Hybridpulverlackierungen verbunden sind, treten hier verstärkt zu Tage. Man kann deshalb diesen Lackaufbau sogar als Modellaufbau zur Ermittlung der Tauglichkeit von Pulverlacken für die Herstellung der vorstehend beschriebenen, eine Basislackierung oder eine Decklackierung enthaltenden Mehrschichtlackierung verwenden.

Die erforderliche Witterungsbeständigkeit könnte mit Pulverlacken auf der Basis von Polyacrylaten eingestellt werden, da diese sehr witterungsbeständige Lackierungen liefern. Lackaufbauten dieser Art sind beispielsweise aus der US Patentschrift US 4,268,542 A 1 bekannt. So beschreibt Beispiel 3 der Patentschrift die Herstellung einer Mehrschichtlackierung durch Applikation eines schwarzen Pulverlacks auf Aluminium, Applikation eines Pulverslurry-Klarlacks auf die resultierende Pulverlackschicht und gemeinsames Einbrennen der beiden Schichten. Die resultierende Mehrschichtlackierung weist einen guten Verlauf auf. Zwar werden in der Patentschrift noch weitere Pulverlacke zur Verwendung in diesem Verfahren vorgeschlagen, indes wird über die Witterungsstabilität der resultierende Mehrschichtlackierungen nichts gesagt. Ansonsten richtet sich die Patentschrift im wesentlichen auf ein Verfahren, bei dem pigmentierte Pulverlackschichten und pigmentierte Pulverslurry-Schichten zu Zwecken des besseren Verlaufs der betreffenden Mehrschichtlackierung übereinander appliziert und gemeinsam eingebrannt werden.

Pulverklarlacke auf der Basis von Polyacrylaten können grundsätzlich nicht neben den üblichen Standardpulverlacken auf Polyesterbasis in ein und derselben Fabrik hergestellt werden, weil dies sofort zu einer Kontamination der Produktion führen würde.

Eine gewisse Verbesserung der Witterungsstabilität von Lackierungen auf der Basis von Standardpulverlacken ließe sich noch durch die Verwendung von Triglycidylisocyanurat (TGIC) als Vernetzungsmittel erzielen. Indes ist diese Verbindung stark toxisch, weswegen ihre Verwendung zunehmend vermieden wird.

Aufgabe der vorliegenden Erfindung ist es, ein neues Verfahren zur Herstellung von farb- und/oder effektgebenden Mehrschichtlackierungen auf Kraftfahrzeugkarosserien oder Teilen hiervon zu finden, bei dem pulverförmige Beschichtungsstoffe auf die Kraftfahrzeugkarosserien und/oder die Kraftfahrzeugkarosserieteile appliziert und die resultierenden Pulverschichten gehärtet werden und das die Nachteile des Standes der Technik nicht mehr länger aufweist, sondern bei dem Pulverlacke verwendet werden können, die bei ihrer Herstellung keine Kontamination der Produktion hervorrufen, und das farb- und/oder effektgebende Mehrschichtlackierungen liefert, die eine hohe Zwischenschichthaftung und eine hohe Haftung zum Substrat sowie auch ohne die Verwendung von TGIC eine besonders hohe Witterungsstabilität aufweisen.

Demgemäß wurde das neue Verfahren zur Herstellung farb- und/oder effektgebender Mehrschichtlackierungen auf Kraftfahrzeugkarosserien oder Teilen hiervon (Substrate) gefunden, bei dem man
(I) einen pigmentierten Pulverlack auf die Substrate appliziert,
(II) die resultierende Pulverlackschicht partiell oder vollständig härtet,
(III) die Pulverlackschicht oder die Pulverlackierung mit einem Unidecklack, einem Basislack und einem Klarlack oder einem Klarlack überschichtet, wonach man
(IV) die resultierenden Schichten jeweils für sich alleine oder gemeinsam mit anderen Schichten (Naß-in-naß-Verfahren) härtet,
wobei der Pulverlack
(A) mindestens einen carboxylgruppenhaltigen Polyester als Bindemittel und
(B) mindestens einen Glycidylester einer aromatischen oder einer gesättigten oder ungesättigten cycloaliphatischen Dicarbonsäure und/oder mindestens ein N,N,N',N'-Tetrakis(beta-hydroxyalkyl)-alkandicarbonsäurediamid als Vernetzungsmittel oder

(A) mindestens einen hydroxylgruppenhaltigen Polyester als Bindemittel und
(B) mindestens ein intern blockiertes Uretdion eines Diisocyanats als Vernetzungsmittel
enthält.

Im folgenden wird das neue Verfahren zur Herstellung farb- und/oder effektgebender Mehrschichtlackierungen auf Kraftfahrzeugkarosserien oder Teilen hiervon als "erfindungsgemäßes Verfahren" bezeichnet.

Weitere erfindungsgemäße Gegenstände gehen aus der Beschreibung hervor.

Das erfindungsgemäße Verfahren dient der Herstellung von farb- und/oder effektgebenden Mehrschichtlackierungen auf Kraftfahrzeugkarosserien und Teilen hiervon. Im Rahmen der vorliegenden Erfindung werden unter Kraftfahrzeugkarosserien Karosserien von PKW oder von Nutzfahrzeugen wie LKW oder Omnibusse verstanden. Unter Teilen von Kraftfahrzeugkarosserien sind insbesondere Anbauteile wie Türen, Motorhauben, Windabweiser, Spoiler, Kotflügel oder Schweller aus Metall oder Kunststoff zu verstehen. Im folgenden werden sie zusammenfassend als Substrate bezeichnet.

Die Substrate können aus Metallen bestehen, wie sie üblicherweise in der Kraftfahrzeugherstellung verwendet werden, wie Eisen, Stahl, verzinkter Stahl oder Aluminium.

Im Falle von Stahl können sie mit Grundierungen versehen werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht (vgl. beispielsweise die deutsche Patentanmeldung DE 196 06 706 A 1). Hierbei kann das Substrat auch einer Oberflächenbehandlung, beispielsweise einer Galvanisierung oder einer Phosphatierung, unterzogen worden sein.

Die ETL-Schicht kann vor der Applikation der weiteren Schichten im Rahmen des erfindungsgemäßen Verfahrens vollständig ausgehärtet werden. Sie kann aber auch lediglich getrocknet werden, wonach mindestens eine weitere Schicht der in erfindungsgemäßer Verfahrensweise hergestellten Mehrschichtlackierung gemeinsam mit der ETL-Schicht eingebrannt wird (vgl. die Patentanmeldungen DE 196 06 706 A 1 oder EP 0 646 420 A 1). Vorzugsweise hat die ETL-Lackierung eine Schichtdicke von 5,0 bis 35, insbesondere 10 bis 25µm.

Im Falle von Aluminium braucht keine ETL-Grundierung aufgebracht werden. Stattdessen kann die Oberfläche des Aluminiums anodisch oxidiert werden, so daß sich eine korossionsstabile Schicht aus Aluminiumoxid bildet, was von der Fachwelt auch als Eloxierung bezeichnet wird.

Mit dem erfindungsgemäßen Verfahren können auch grundierte oder nicht grundierte Kunststoffe lackiert werden, die bei den angewandten Einbrenntemperaturen dimensionsstabil sind, wie beispielsweise Polyphenylenether, SMC, BMC oder Polyethersulfon oder -keton. Die Kunststoffe können selbstverständlich auch Polymerblends, modifizierte Kunststoffe oder faserverstärkte Kunststoffe sein. Im Falle von nichtfunktionalisierten und/oder unpolaren Substratoberflächen können diese Kunstsstoffe vor der Beschichtung in bekannter Weise einer Vorbehandlung, wie mit einem Plasma oder mit Beflammen, unterzogen oder mit einer Hydrogrundierung versehen werden.

Im ersten Schritt des erfindungsgemäßen Verfahrens wird ein farb- und/oder effektgebender Pulverlack auf die vorstehend beschriebenen Substrate appliziert. Hierbei werden die üblichen und bekannten Verfahren und Vorrichtungen angewandt, wie sie beispielsweise in Coatings Partner, The magazine of BASF, Powder Coatings Special, 1/2000, oder in der Firmenschrift von BASF Coatings AG "Pulverlacke, Pulverlacke für industrielle Anwendungen", Januar 2000, beschrieben werden.

Wesentlich ist hierbei, daß der erfmdungsgemäß zu verwendende Pulverlack entweder mindestens einen carboxylgruppenhaltigen Polyester oder mindestens einen hydroxylgruppenhaltigen Polyester als Bindemittel (A) enthält.

Beispiele geeigneter erfindungsgemäß zu verwendender carboxylgruppenhaltiger Polyester (A) werden in der deutschen Patentanmeldung DE 196 06 706 A 1, Spalte 6, Zeile 29, bis Spalte 7, Zeile 14, im Detail beschrieben. Zusätzlich zu den dort aufgeführten handelsüblichen Polyestern seien noch Uralac® P846, P2450, P3475, P3480 oder P3485 der Firma DSM oder Alftalat® AN 783 der Firma Solutia genannt.

Der erfindungsgemäß zu verwendende Pulverlack auf der Basis carboxylgruppenhaltiger Polyester (A) enthält mindestens einen Glycidylester einer aromatischen oder einer gesättigten oder ungesättigten cyclolaliphatischen Dicarbonsäure und/oder mindestens ein N,N,N',N'-Tetrakis(beta-hydroxyalkyl)-alkandicarbonsäurediamid als Vernetzungsmittel (B). Vorzugsweise enthält der Pulverlack mindestens einen Glycidylester einer aromatischen oder einer gesättigten oder ungesättigten cycloaliphatischen Dicarbonsäure oder mindestens ein N,N,N',N'-Tetrakis(beta-hydroxyalkyl)-alkandicarbonsäurediamid.

Beispiele geeigneter aromatischer Dicarbonsäuren sind Phthalsäure, Terephtalsäure oder Isophthalsäure, insbesondere Terephthalsäure und/oder Isophthalsäure.

Beispiele geeigneter ungesättigter cycloaliphatischer Dicarbonsäuren sind Tetrahydrophthalsäure, -terephthalsäure oder -isophthalsäure.

Beispiel geeigneter gesättigter cycloaliphatischer Dicarbonsäuren sind Hexahydrophthalsäure, -terephhtalsäure oder-isophthalsäure.

Von diesen sind die aromatischen Dicarbonsäuren besonders vorteilhaft und werden daher bevorzugt verwendet.

Beispiele geeigneter beta-Hydroxyalkylgruppen sind 2-Hydroxyethyl, 2-Hydroxypropyl oder 2-Hydroxy-n-butyl, von denen 2-Hydroxyethyl besonders vorteilhaft ist und daher erfindungsgemäß bevorzugt verwendet wird.

Beispiele geeigneter Alkandicarbonsäurediamide sind die Diamide von C₅- bis C₁₆-Alkandiacarbonsäuren wie Bernsteinsäure, Adipinsäure, Sebacinsäure oder Korksäure, insbesondere Adipinsäure.

Erfindungsgemäß werden daher die Diglycidylester der Terephthalsäure und/oder Isophthalsäure oder N,N,N',N'-Tetrakis(beta-hydroxyethyl)-adipinsäurediamid besonders bevorzugt als Vernetzungsmittel (B) verwendet.

Beispiele geeigneter erfindungsgemäß zu verwendender hydroxylgruppenhaltiger Polyester (A) sind Polyester, die aus den in der deutschen Patentanmeldung DE 196 06 706 A 1, Spalte 6, Zeile 29, bis Spalte 7, Zeile 14, im Detail beschriebenen Ausgangsverbindungen hergestellt werden, nur daß die Mengenverhältnisse von Polyolen zu Polycarbonsäuren und/oder Polycarbonsäurederivaten so gewählt wird, daß die resultierenden hydroxylgruppenhaltigen Polyester (A) eine Säurezahl unterhalb 10, vorzugsweise unterhalb 5 und insbesondere unterhalb 3 mgKOH/g aufweisen. Ihre Hydroxylzahl liegt vorzugsweise bei 20 bis 250, bevorzugt 25 bis 200, besonders bevorzugt 30 bis 180, ganz besonders bevorzugt 35 bis 170 und insbesondere 40 bis 160 mg KOH/g. Hydroxylgruppenhaltige Polyester sind Handelsprodukte und werden beispielsweise unter der Marke Uralac® , z.B. Uralac® 1480, von der Firma DSM vertrieben.

Geeignete Diisocyanate zur Herstellung der intern blockierten Uretdione, die die Vernetzungsmittel (B) für die hydroxylgruppenhaltigen Polyester (A) darstellen, sind aliphatische, cycloaliphatische oder aliphatisch-cycloaliphatische Diisocyanate. Hiervon sind diejenigen bevorzugt, deren beiden Isocyanatgruppen eine unterschiedliche Reaktivität aufweisen. Hiervon sind wiederum diejenigen besonders bevorzugt, deren eine Isocyanatgruppe an einen Alkylrest und deren andere Isocyanatgruppe an einen Cycloalkylrest gebunden ist.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2- , 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.% und insbesondere 20 Gew.-%, wie es den Patentschriften DE-A-44 14 032, GB-A-1220717, DE-A-16 18 795 oder DE-A-17 93 785 beschrieben wird, bevorzugt Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, insbesondere Isophorondiisocyanat.

Die Herstellung der inern blockierten Uretdione aus den Diisocyanaten bietet keine methodischen Besonderheiten, sondern erfolgt beispielweise wie in der europäischen Patentanmeldung EP 0 045 998 A 1 beschrieben.

Gegebenenfalls noch in den intern blockierten Uretdionen vorhandene freie Isocyanatgruppen können mit geeigneten Blockierungsmittel blockiert werden. Diese Blockierungsmittel können indes auch bereits bei der Herstellung der intern blockierten Uretdione zugegen sein.

Beispiele geeigneter Blockierungsmittel sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin oder Diole wie Ethylenglykol, Diethylenglykol, Propylenglykol, Butylenglykol, gegebenenfalls im Gemisch mit mindestens einem der Alkohole;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime oder Ketoxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol, Imidazole oder Triazole; sowie
xvii) Gemische dieser Blockierungsmittel wie Dimethylpyrazol und Triazole, Malonester und Acetessigsäureester oder Dimethylpyrazol und Succinimid.

Hiervon bieten die Diole oder die Gemische von Alkoholen und Diolen (iv) besondere Vorteile und werden deshalb erfindungsgemäß besonders bevorzugt verwendet.

Beispiele für besonders gut geeignete intern blockierte Uretdione von Diisocyanaten sind aus dem Artikel von A. Wennig, J.-V. Weiß und W. Grenda, "Polyisocyanates today and tomorrow", European Coatings Journal (ECJ), Heft 4, 1998, Seiten 244 bis 249, bekannt. Es sind handelsübliche Produkte, die beispielsweise unter der Marke Vestagon®, z.B. Vestagon® BF 1540, BF 1300 oder BF 1310, von der Firma Hüls vertrieben werden.

Der Gehalt der erfindungsgemäß zu verwendenden Pulverlacke an den Bindemitteln (A) kann sehr breit variieren. Vorzugsweise liegt er bei 20 bis 95, bevorzugt 25 bis 85, besonders bevorzugt, 30 bis 75, ganz besonders bevorzugt 35 bis 65 und insbesondere 40 bis 60 Gew.%, jeweils bezogen auf den Pulverlack.

In den erfindungsgemäß zu verwendenden Pulverlacken sind die Vernetzungsmittel (B) vorzugsweise in einer Menge von 0,5 bis 20, bevorzugt 1,0 bis 18, besonders bevorzugt 2,0 bis 17, ganz besonders bevorzugt 3,0 bis 16 und insbesondere 5,0 bis 15 Gew.-%, jeweils bezogen auf den Pulverlack, enthalten.

Darüber hinaus können in den erfindungsgemäß zu verwendenden Pulverlacken die üblichen und bekannten, niedermolekularen epoxidgruppenhaltigen Vernetzungsmittel, wie sie beispielsweise in der Patentanmeldung DE 196 06 706 A 1, Spalte 7, Zeilen 15 bis 25 beschrieben werden, in untergeordneten Mengen enthalten sein. Der Begriff "untergeordnete Mengen" bedeutet, daß die Härtungseigenschaften und das Eigenschaftsprofil der resultierenden Pulverlackierungen nach wie vor im wesentlichen von den erfindungsgemäß zu verwendenden Vernetzungsmitteln (B) bestimmt werden.

Der erfindungsgemäß zu verwendende Pulverlack enthält des weiteren mindestens ein farb- und/oder effektgebendes Pigment (C).

Die Pigmente (C) können aus anorganischen oder organischen Verbindungen bestehen. Der erfindungsgemäß zu verwendende Pulverlack gewährleistet daher aufgrund dieser Vielzahl geeigneter Pigmente (C) eine universelle Einsatzbreite und ermöglicht die Realisierung einer Vielzahl von Farbtönen und optischer Effekte.

Als Effektpigmente (C) können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente (C) sind Titandioxid, Eisenoxide und Ruß. Beispiele für geeignete organische farbgebende Pigmente sind Thioindigopigmente Indanthrenblau, Irgalith-Blau, Cromophthalrot, Irgazinorange, Sicotransgelb, Sicotan-Gelb, Hostaperm-Gelb, Paliotan-Gelb und Heliogen-Grün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigments volumenkonzentration«, Seite 563 »Thioindigo-Pigmente« und Seite 567 »Titandioxid-Pigmente« verwiesen.

Der Anteil der Pigmente (C) an den erfindungsgemäß zu verwendenden Pulverlacken kann sehr breit variieren und richtet sich nach den Erfordernissen des Einzelfalls, insbesondere nach dem einzustellende optischen Effekt und/oder Deckvermögen der jeweils verwendeten Pigmente (C).

Der erfindungsgemäß zu verwendende Pulverlack kann außerdem noch organische und anorganische Füllstoffe (D) enthalten.

Beispiele geeigneter organischer und anorganischer Füllstoffe (D) sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Polyamidpartikel. Ergänzend wird auf Römpp Lexikon Lacke und Druckfarben, Georg Thieme Verlag, 1998, Seiten 250 ff., »Füllstoffe«, verwiesen. Weitere Beispiele geeigneter Füllstoffe (D) sind aus der deutschen Patentanmeldung DE 196 06 706 A 1, Spalte 8, Zeilen 30 bis 64, bekannt. Vorzugsweise werden sie in den dort angegebenen Mengen eingesetzt.

Vorzugsweise liegt der Gehalt an Pigmenten (C) sowie gegebenenfalls an Füllstoffen (D) bei 0,1 bis 70, bevorzugt 0,5 bis 65, besonders bevorzugt 1,0 bis 60, ganz besonders bevorzugt 2,0 bis 55 und insbesondere 2,5 bis 50 Gew.-%, jeweils bezogen auf den Pulverlack.

Des weiteren kann der erfindungsgemäß zu verwendende Pulverlack noch mindestens einen Zusatzstoff (E) enthalten. Beispiele geeigneter Zusatzstoffe (E) sind sonstige, von den Polyestern (A) verschiedene oligomere und polymere Bindemittel, UV-Absorber, Lichtschutzmittel, Radikalfänger, Entlüftungsmittel, Slipadditive, Haftvermittler, Verlaufmittel, Rieselhilfen, Korrosionsinhibitoren, Wachse und Mattierungsmittel. Weitere Beispiele für diese und andere Zusatzstoffe (D) werden in dem Lehrbuch »Lackadditive« von Johan Bieleman, Wiley-VCH, Weinheim, New York, 1998, im Detail beschrieben.

Die Herstellung der erfindungsgemäß zu verwendenden Pulverlacke weist keine methodischen Besonderheiten auf, sondern erfolgt mit Hilfe der üblichen und bekannten Methoden und Vorrichtungen, wie sie beispielsweise in der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, beschrieben werden.

Die Komgrößenverteilung der erfindungsgemäß zu verwendenden Pulverlacke kann vergleichsweise breit variieren und richtet sich nach dem jeweiligen Verwendungszweck. Vorzugsweise ist die Komgrößenverteilung vergleichsweise eng mit einem sehr geringen Anteil an Grobkorn (Korngrößen oberhalb 95 µm) und an Feinstkorn (Korngrößen unter 5,0µm). Besonders bevorzugt werden Pulverlacke mit der in der europäischen Patentanmeldung EP 0 666 779 A 1 beschriebenen Korngrößenverteilung angewandt.

Auch die Applikation der Pulverlacke erfolgt nach den üblichen und bekannten Methoden, wie sie beispielsweise in den beiden vorstehend genannten Firmenschriften beschrieben werden.

Nach der Applikation werden die Pulverlackschichten aufgeschmolzen und thermisch gehärtet, wodurch die Pulverlackierungen resultieren. Auch die Härtung der Pulverlackschichten weist keine methodischen Besonderheiten auf, sondern erfolgt nach den üblichen und bekannten thermischen Methoden wie Erhitzen in einem Umluflofen oder Bestrahlen mit IR-Lampen oder Lampen, die nahe Infrarot(NIR)-Strahlung emittieren, bei Temperaturen von 120 bis 220, vorzugsweise 130 bis 220, bevorzugt 150 bis 200 und insbesondere 160 bis 190°C. selbstverständlich können diese Methoden und Vorrichtungen auch für die thermische Härtung der anderen Schichten, die die Mehrschichtlackierungen aufbauen, angewandt werden.

Sofern der Pulverlack im Rahmen des erfindungsgemäßen Verfahrens auf eine nicht oder nur partiell ausgehärtete Elektrotauchlackschicht (ETL) appliziert wurde, wird diese in dieser Stufe des erfindungsgemäßen Verfahrens gemeinsam mit der Pulverlackschicht gehärtet (vgl. die Patentanmeldungen DE 196 06 706 A 1 oder EP 0 646 420 A 1).

In einer weiteren Variante des erfindungsgemäßen Verfahrens wird die Pulverlackschicht, die gegebenenfalls auf eine nicht oder nur partiell ausgehärtete oder eine vollständige ausgehärtete ETL appliziert wurde, aufgeschmolzen und gar nicht oder nur partiell gehärtet oder keiner weiteren Nachbehandlung unterworfen, sondern wird erst mit mindestens einer weiteren Schicht überschichtet, wonach sie gemeinsam mit der gegebenenfalls vorhandenen ETL und der weiteren Schicht oder den weiteren Schichten gehärtet wird. Dies wird von der Fachwelt auch als "dry-on-wet"-Verfahren bezeichnet.

Nach dem erfindungsgemäßen Verfahren wird in einer ersten bevorzugten Variante auf die Pulverlackschicht oder auf die Pulverlackierung ein üblicher und bekannter Unidecklack aufgetragen. Die resultierende Unidecklackschicht kann dann für sich alleine oder gemeinsam mit der Pulverlackschicht sowie mit der gegebenenfalls vorhandenen ETL gehärtet werden.

In einer zweiten bevorzugten Variante des erfindungsgemäßen Verfahrens werden auf die Pulverlackschicht oder auf die Pulverlackierung ein Basislack, insbesondere ein Wasserbasislack, und ein Klarlack aufgebracht. Hiernach können die resultierende Basislackschicht und die resultierende Klarlackschicht nacheinander für sich alleine gehärtet werden. Die Basislackschicht und die Pulverlackschicht können aber auch gemeinsam gehärtet werden, wonach die Klarlackschicht für sich alleine gehärtet wird. Des weiteren können die Pulverlackschicht, die Basislackschicht und die Klarlackschicht gemeinsam gehärtet werden. Vorzugsweise werden die Basislackschicht und die Klarlackschicht gemeinsam gehärtet ("klassisches" Naß-in-naß-Verfahren).

Bei dieser Variante des erfindungsgemäßen Verfahrens können im wesentlichen rein farbgebende Pulverlacke und im wesentlichen rein effektgebende Basilacke eingesetzt werden. Durch diese räumliche Trennung der farb- und effektgebenden Funktionen lassen sich neuartige attraktive optische Effekte in einfacher und eleganter Weise erzeugen. Die Anwendungsbreite des erfindungsgemäßen Verfahrens wird hierbei noch weiter gesteigert, indem man die räumliche Trennung der Funktionen mehr oder weniger stark abstuft, beispeilsweise indem die Pulverlackierung eine ausgeprägtere effektgebende Wirkung und/oder die Basislackierung eine ausgeprägtere farbgebende Wirkung aufweist.

In einer dritten bevorzugten Variante des erfindungsgemäßen Verfahrens wird auf die Pulverlackierungen oder die Pulverlackschicht ein Klarlack appliziert, wonach die resultierende Klarlackschicht entweder gemeinsam mit der Pulverlackschicht oder für sich alleine gehärtet wird.

Die Klarlackschicht oder die Klarlackierung können noch mit einem hochkratzfesten Sealer überschichtet werden, der dann gemeinsam mit der Klarlackschicht oder für sich alleine gehärtet werden kann.

Bei dem erfindungsgemäßen Verfahrens kann die Härtung der Unidecklackschicht oder der Basislackschicht, der Klarlackschicht und/oder des Sealers, insbesondere aber der Klarlackschicht mit aktinischer Strahlung ergänzt werden, was von der Fachwelt auch als Dual Cure bezeichnet wird. Im Falle der Klarlackschicht und/oder des Sealers kann die Härtung auch allein mit aktinischer Strahlung erfolgen. Vorzugsweise sind dann die darunterliegenden Schichten bereits vollständig gehärtet. Im Rahmen der vorliegenden Erfindung wird unter aktinischer Strahlung elektromagnetische Strahlung wie nahes Infrarot (NIR), sichtbares Licht, UV-Strahlung oder Röntgenstrahlung, insbesondere UV-Strahlung, oder Korpuskularstrahlung, wie Elektronenstrahlung. Geeignete Vorrichtungen und Verfahren zur Härtung mit aktinischer Strahlung werden in den nachstehend aufgeführten Patentschriften betreffend mit aktinischer Strahlung härtbare Klarlacke beschrieben.

Beispiele geeigneter Unidecklacke und Basislacke, insbesondere Wasserbasislacke, die im erfindungsgemäßen Verfahren verarbeitet werden können, sind aus den Patentschriften EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A 1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1,EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1 oder EP 0 817 684, Spalte 5, Zeilen 31 bis 45, bekannt.

In dem erfindungsgemäßen Verfahren können grundsätzlich alle üblichen und bekannten Einkomponenten(1K)-, Zweikomponenten(2K)- oder Mehrkomponenten(3K, 4K)-Klarlacke, Pulverklarlacke, Pulverslurry-Klarlacke oder UV-härtbare Klarlacke verwendet werden.

Thermisch härtbare Einkomponenten(1K)-, Zweikomponenten(2K)- oder Mehrkomponenten(3K, 4K)-Klarlacke sind aus den europäischen Patentanmeldungen DE 42 04 518 A 1, 0 594 068 A 1, 0 594 071 A 1, 0 594 142 A 1, 0 604 992 A 1 oder 0 596 460 A 1 den internationalen Patentanmeldungen WO 94/10211, WO 94/10212, WO 94/14213, WO 94/22969 oder WO 92/22615 oder den amerikanischen Patentschriften US 5,474,811 A 1, 5,356,669 A 1 oder 5,605,965 A 1 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. die amerikanischen Patentschriften US 5,474,811 A 1, 5,356,669 A 1 oder 5,605,965 A 1, die internationalen Patentanmeldungen WO 94/10211, WO 94/10212 oder WO 94/10213 oder die europäischen Patentanmeldungen EP 0 594 068 A 1, 0 594 071 A 1 oder 0 594 142 A 1).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Thermisch härtbare Pulverklarlacke sind beispielsweise aus der deutschen Patentanmeldung DE 42 22 194 A 1 oder der Produkt-Information der Firma BASF Lacke + Farben AG, "Pulverlacke", 1990, oder der Firmenschrift von BASF Coatings AG "Pulverlacke, Pulverlacke für industrielle Anwendungen", Januar 2000, bekannt.

Pulverklarlacke enthalten als wesentliche Bestandteile bekanntermaßen epoxidgruppenhaltige Bindemittel und Polycarbonsäuren als Vernetzungsmittel.

Thermisch härtbare Pulverslurry-Klarlacke sind beispielsweise aus der amerikanischen Patentschrift US 4,268,542 A 1 und den deutschen Patentanmeldungen DE 195 40 977 A 1, DE 195 18 392 A 1, DE 196 17 086 A 1, DE-A-196 13 547, DE 196 52 813 A 1 oder DE-A-198 14 471 A 1 bekannt oder werden in der nicht vorveröffentlichten deutschen Patentanmeldung DE 198 14 471.7 beschrieben.

Pulverslurry-Klarlacke enthalten bekanntermaßen Pulverklarlacke in einem wäßrigen Medium dispergiert.

UV-härtbare Klarlacke und Pulverklarlacke gehen beispielsweise aus den europäischen Patentanmeldungen EP 0 928 800 A 1, 0 636 669 A 1, 0 410 242 A 1, 0 783 534 A 1, 0 650 978 A 1, 0 650 979 A 1, 0 650 985 A 1, 0 540 884 A 1, 0 568 967 A 1, 0 054 505 A 1 oder 0 002 866 A 1, den deutschen Patentanmeldungen DE 197 09 467 A 1, 42 03 278 A 1, 33 16 593 A 1, 38 36 370 A 1, 24 36 186 A 1 oder 20 03 579 B 1, den internationalen Patentanmeldungen WO 97/46549 oder 99/14254 oder den amerikanischen Patentschriften US 5,824,373 A 1, 4,675,234 A 1, 4,634,602 A 1, 4,424,252 A 1, 4,208,313 A 1, 4,163,810 A 1, 4, 129,488 A 1, 4,064,161 A 1 oder 3,974,303 A 1 hervor. Des weiteren sind Klarlacke bekannt, die thermisch und mit aktinischer Strahlung vemetzt werden können (vgl. die europäische Patentanmeldung EP 0 844 286 A 1).

Beispiele geeigneter, für das erfindungsgemäße Verfahren zu verwendender, hochkratzfeste Sealer liefernde Beschichtungsstoffe werden in den deutschen Patentschriften DE 43 03 570 A 1, DE 34 07 087 A 1, DE 40 11 045 A 1, DE 40 25 215 A 1, DE 38 28 098 A 1, DE 40 20 316 A 1 oder DE 41 22 743 A 1 beschrieben. Geeignet sind auch organisch modifizierte Keramikmaterialien, die unter dem Markennamen ORMOCER® vertrieben werden.

Dies belegt, daß das erfindungsgemäße Verfahren mit einer außerordentlichen Vielfalt an unterschiedlichen Beschichtungsstoffen durchgeführt werden kann, war ein besonderer Vorteil ist.

Im allgmeinen werden die. Beschichtungsstoffe in einer Naßschichtdicke appliziert, daß nach ihrer Aushärtung Schichten mit der für ihre Funktionen notwendigen und vorteilhaften Schichtdicken resultieren. Im Falle der Pulverlackierung liegt sie vorzugsweise bei 30 bis 300, bevorzugt 35 bis 250, besonders bevorzugt 40 bis 200, ganz besonders bevorzugt 45 bis 150 und insbesondere 50 bis 120µm, im Falle der Basislackierung liegt sie vorzugsweise bei 5 bis 50, bevorzugt 5 bis 40, besonders bevorzugt 5 bis 30 und insbesondere 10 bis 25 µm, und im Falle der Klarlackierung liegt sie bei vorzugsweise 10 bis 100, bevorzugt 15 bis 80, besonders bevorzugt 20 bis 75 und insbesondere 25 bis 70 µm. Hochkratzfeste Sealer weisen im allgemeinen geringere Schichtdicken, beispielsweise unter 5,0 µm, auf.

Das erfindungsgemäße Verfahren liefert Mehrschichtlackierungen, die Mehrschichtlackierungen, die nicht in erfindungsgemäßer Verfahrensweise hergestellt worden sind, in der Oberflächenglätte, der Korrosionsschutzwirkung, der Haftung auf dem Substrat, der Zwischenschichthaftung, der Steinschlagbeständigkeit, der Witterungsbeständigkeit und der Chemikalienbeständigkeit übertreffen. Überraschenderweise erreichen sie bzw. übertreffen sie das Niveau der besonders witterungsbeständigen Pulverklarlackierungen auf Polyacrylatbasis.

Dies ist auch bei der für die Nutzfahrzeuglackierung wirtschaftlich und technisch vorteilhaften Mehrschichtlackierung aus farb- und/oder effektgebender Pulverlackierung und Klarlackierung der Fall. Da sich - wie eingangs bereits erwähnt - eine fehlende Witterungsbeständigkeit bei diesem Lackaufbau besonders rasch und deutlich bemerkbar macht, kann diese Mehrschichtlackierung als Modell- oder Testaufbau für die Ermittlung der Witterungsbeständigkeit von Mehrschichtlackierungen aus farb- und/oder effektgebender Pulverlackierung, farb- und/oder effektgebender Basislackierung und Klarlackierung dienen. Weist nämlich die Pulverlackierung in dem Testaufbau bereits die erforderliche Witterungsbeständigkeit auf, wird sie dies erst recht in einem Aufbau aufweisen, bei der sie durch zusätzliche Lackschichten von der Außenwelt abgeschirmt ist.

Die erfindungsgemäßen Mehrschichtlackierungen haben daher eine besonders hohe Qualität und eine lange Gebrauchsdauer auch unter klimatisch extremen Bedingungen, was sie für den Anwender wirtschaftlich und technisch ganz besonders attraktiv macht.

### Beispiele und Vergleichsversuche

### Herstellbeispiel 1

### Die Herstellung, Applikation und Härtung der Pulverlacke

Die Pulverlacke, die bei der Durchführung der Beispiele 1 bis 4 und der Vergleichsversuche V1 und V2 verwendet wurden, wurden nach der folgenden allgemeinen Vorschrift hergestellt.

Die in der Tabelle 1 aufgeführten Bestandteile der Pulverlacke wurden der jeweiligen Rezepturen gemäß eingewogen. Die Ansatzgröße lag bei 5,0 kg. Die jeweiligen Bestandteile wurden in einem Henschel-Fluidmischer während zwei Minuten bei 2.800 U/min homogenisiert. Die resultierenden Mischungen wurden nach der Vormischung mittels eines Trichters einem Extruder zugeführt (BUSS PR 46). Der Extruder wurde jeweils mit 110°C Manteltemperatur angefahren, und die Drehzahl wurde so gewählt, daß die Manteltemperatur sich bei 60°C hielt. Das austretende Extrudat wurde mit einer Kühlwalze auf 20°C abgekühlt und mit einem Brecher zu Chips zerkleinert. Die Chips wurden vorgeschnitten und in einer Stiftmühle vermahlen. Das resultierende Pulver wurde mit einem Taumelsieb über 125µm abgesiebt. Die Applikation erfolgte jeweils mit Hilfe einer Laborhandpistole mit Corona-Aufladung vom Typ Wagner ESB in einer Schichtstärke von 60 bis 90µm auf mit einer üblichen und bekannten kathodisch abgeschiedenen und eingebrannten KTL beschichteten Stahltafeln. Die resultierenden Pulverlackschichten wurden während 10 - 25 Minuten bei 160 - 180 °C eingebrannt.

Die Tabelle 1 gibt einen Überblick über die Rezepturen der Pulverlacke.

**Tabelle 1:**

| **Die stoffliche Zusammensetzung der erfindungsgemäß zu verwendenden Pulverlacke (Beispiele 1 bis 4) und der nicht erfindungsgemäß zu verwendenden Pulverlacke (Vergleichsversuche V1 und V2)** | | | |
|---|---|---|---|
| | **Zusammensetzung (Gewichtsteile):** | | |
| **Beispiele Nr.:** | **1,2** | **3,4** | |
| **Vergleichs- versuche Nr.:** | | | **V1,V2** |

| **Bindemittel:** | | | |
|---|---|---|---|
| Uralac® P3480 ^{a)} | 55,4 | - | - |
| Uralac® P3485 ^{a)} | | 54,87 | - |
| Alftalat® AN 783 ^{b)} | - | - | 40 |
| Epikote® 3003 FCA- 10 ^{c)} | - | - | 7 |
| Araldit® GT 6063 ^{e)} | - | - | 12 |

| **Vernetzungsmittel:** | | | |
|---|---|---|---|
| Araldit® PT910^{d)} | 3,6 | 4,13 | - |

| **Pigmente:** | | | |
|---|---|---|---|
| Ruß Spezialschwarz 4 | 0,1 | 0,1 | 0,1 |
| Titan Rutil 2310 ^{f)} | 11,3 | 11,3 | 11,3 |
| Blanc Fixe® PLV.N^{g)} | 26,64 | 26,64 | 26,64 |
| Bayferrox® 130 BM/P^{h)} | 0,99 | 0,99 | 0,99 |
| Irgalith-Blau® PDS 6ⁱ⁾ | 0,07 | 0,07 | 0,07 |

| **Zusatzstoffe:** | | | |
|---|---|---|---|
| Aerosil®^{j)} | 0,2 | 0,2 | 0,2 |
| Benzoin | 0,6 | 0,6 | 0,6 |
| Licowax® R 21^{k)} | 0,1 | 0,1 | 0,1 |
| Tinuvin® 144^{l)} | - | - | 0,5 |
| BYK® 360 P ^{m)} | 1 | 1 | - |

| | | | |
|---|---|---|---|
| a) carboxylgruppenhaltige Polyester der Firma DSM; | | | |
| b) carboxylgruppenhaltiger Polyester der Firma Hoechst AG; | | | |
| c) Epoxidharz der Firma Deutsche Shell; | | | |
| d) Gemisch von Terephthal- und Isophthalsäuerediglycidylester der Firma Ciba; | | | |
| e) Epoxidharz der Firma Ciba; | | | |
| f) Titandioxid-Pigment der Firma Kronos International; | | | |
| g) Bariumsulfat-Pigment der Firma Sachtleben; | | | |
| h) Eisenoxid-Pigment der Firma Bayer AG; | | | |
| i) organisches Blau-Pigment der Firma Ciba | | | |
| j) pyrogenes Siliciumdioxid der Firma Clariant | | | |
| k) Gleitmittel der Firma Clariant; | | | |
| l) Lichtschutzmittel der Firma Ciba Specialty Chemicals; | | | |
| m) Verlaufmittel der Firma Byk Chemie; | | | |

### Herstellbeispiel 2

### Die Herstellung von Mehrschichtlackierungen des Aufbaus Pulverlackierung/Klarlackierung

Die in den nachstehend beschriebenen Beispielen 2 und 4 und dem Vergleichsversuch V2, beschriebenen Mehrschichtlackierungen des Aufbaus Pulverlackierung/Klarlackierung wurden nach der folgenden allgemeinen Vorschrift hergestellt.

Die gemäß dem Herstellbeispiel 1 hergestellten Pulverlackierungen wurden mit Hilfe einer konventionellen Fließbecherpistole mit einem handelsüblichen "High solid"-Zweikompomponentenklarlack der Firma BASF Coatings AG überschichet. Nach der Härtung lag die Schichtdicke bei 35 bis 45µm. Zur besseren Vergleichbarkeit wurde bei den betreffenden Beispielen und Vergleichsversuchen stets der gleiche Klarlack eingesetzt.

### Herstellbeispiel 3

### Die Herstellung von Mehrschichtlackierungen des Aufbaus Pulverlackierung/Basislackierung/Klarlackierung

Die in den nachstehend beschriebenen Beispielen 1 und 3 und dem Vergleichsversuch V1 beschriebenen Mehrschichtlackierungen des Aufbaus Pulverlackierung/Basislackierung/Klarlackierung wurden nach der folgenden allgemeinen Vorschrift hergestellt.

Die gemäß dem Herstellbeispiel 1 hergestellten Pulverlackierungen wurden mit Hilfe einer konventionellen Fließbecherpistole mit einem handelsüblichen blauschwarzen Basislack (Deep Amethyst FW06-701C der Firma BASF CoatingsAG) beschichtet. Der besseren Vergleichbarkeit halber wurden bei allen betreffenden Beispielen und Vergleichsversuchen der gleiche Basislack verwendet.

Nach der Applikation wurde die Basislackschicht abgelüftet und während 10 Minuten bei 50 °C getrocknet. Hiernach wurde sie in der in Herstellbeispiel 2 beschriebenen Weise mit dem dort verwendeten Klarlack überschichtet. Anschließend wurden Basislackschicht und Klarlackschicht bei 145 °C während 30 Minuten gemeinsam gehärtet.

Es resultierten Basislackierungen einer Schichtdicke von 12 bis 15µm und Klarlackierungen einer Schichtdicke von 35 bis 45µm.

### Beispiele 1 bis 4 und Vergleichsversuche V1 und V2

### Witterungsstabilität der in erfindungsgemäßer Weise hergestellten Mehrschichtlackierungen (Beispiele 1 bis 4) und der in herkömmlicher Weise hergestellten Mehrschichtlackierungen (Vergleichsversuche V1 und V2)

Die Witterungsstabilität der gemäß den Herstellbeispielen 2 und 3 hergestellten Prüftafeln wurde nach dem CAM-Kurzbewitterungstest mit Hilfe von Xenotest®-Geräten der Firma Atlas Material Testing Technology B.V., Niederlande, bestimmt. Die Bewitterungszeit lag jeweils bei 2000 Stunden.

In einer ersten Serie wurde die Haftfestigkeit der Mehrschichtlackierungen nach dem Kreuzschnittest direkt nach der Bewitterung geprüft und wie folgt bewertet: Note 0 = keine Enthaftung; 1 = geringe Enthaftung aber noch i. O.; 2 = partielle Enthaftung, n. i . O.; 3 - 4 = großflächige Enthaftung, n. i. O.; 5 = völlige Enthaftung. Die Ergebnisse finden sich in der Tabelle 2 unter Serie 1.

In einer zweiten Serie wurde die Haftfestigkeit der Mehrschichtlackierungen nach der Bewitterung, der 72-stündigen Exposition im Schwitzwasser-Konstantklima (SKK) und der einstündigen Regeneration nach dem Kreuzschnittest ermittelt und, wie vorstehend beschrieben, benotet. Die Ergebnisse finden sich in der Tabelle 2 unter Serie 2.

In einer dritten Serie wurde die zweite Serie nach 24-stündiger Regeneration wiederholt geprüft. Die Ergebnisse finden sich ebenfalls in der Tabelle 2 unter Serie 3.

Der Vergleich der Ergebnisse zeigt, daß die Witterungsstabilität der Mehrschichtlackierung des Aufbaus Pulverlackierung/Basislackierung/Klarlackierung des Vergleichsversuche V1 derjenigen der Mehrschichtlackierungen der Beispiele 1 und 3 noch in etwa entspricht. Indes ist die Witterungsstabilität der Mehrschichtlackierung des Aufbaus Pulverlackierung/Klarlackierung des Vergleichsversuchs V2 derjenigen der Mehrschichtlackierungen der Beispiele 2 und 4 eindeutig unterlegen. Mit anderen Worten der für die Pulverlackierungen härtere Test im Aufbau Pulverlackierung/Klarlackierung differenziert die Pulverlackierungen eindeutig nach ihrer Witterungsstablitität.

**Tabelle 2:**

| **Die Witterungsbeständigkeit der in erfindungsgemäßer Weise (Beispiele 1 bis 4) und der in nicht erfindungsgemäßer Weise (Vergleichsversuche V1 und V2) hergestellten Mehrschichtlackierungen** | | | |
|---|---|---|---|
| **Beispiele und Vergleichsversuche Nr.** | **Testergebisse:** | | |
| | **Serie 1** | **Serie 2** | **Serie 3** |
| 1 | 0 | 0 | 0 |
| 2 | 1 | 1 | 1 |
| 3 | 0 | 0 | 0 |
| 4 | 0 | 5 | 5 |
| V1 | 0 | 0 | 0 |
| V2 | 5 | - | - |

### Herstellbeispiel 4

### Die Herstellung, die Applikation und die Härtung der Pulverlacke

Die Pulverlacke, die bei der Durchführung der Beispiele 5 bis 12 und der Vergleichsversuche V3 bis V5 verwendet wurden, wurden nach der im Herstellbeispiel 1 angegebenen allgemeinen Vorschrift hergestellt, appliziert und gehärtet. Die Tabelle 3 gibt einen Überblick über die stoffliche Zusammensetzung der Pulverlacke.

**Tabelle 3:**

| **Die stoffliche Zusammensetzung der erfindungsgemäß zu verwendenden Pulverlacke (Beispiele 5 bis 12) und der nicht erfindungsgemäß zu verwendenden Pulverlacke (Vergleichsversuche V3 bis V5)** | | | | | | | | | | | |
|---|---|---|---|---|---|---|---|---|---|---|---|
| | **Zusammensetzung (Gewichtsteile):** | | | | | | | | | | |
| **Beispiele Nr.:** | **5** | **6** | **7** | **8** | **9** | **10** | **11** | **12** | | | |
| **Vergleichs- versuche Nr.:** | | | | | | | | | **V3** | **V4** | **V5** |
| **Bindemittel:** | | | | | | | | | | | |
| Uralac® 1480^{a)} | 52,8 | - | - | - | - | - | 52,8 | 50,9 | - | - | - |
| Uralac® P 5000^{b)} | - | - | - | - | - | - | - | - | - | - | 54,6 |
| Alftalat® AN 783 ^{c)} | - | - | - | - | - | - | - | - | 38,5 | - | - |
| Araldit® GT 6063^{d)} | - | - | - | - | - | - | - | - | 20,2 | 14,7 | - |
| Uralac® P 2450 ^{b)} | - | - | - | - | - | - | - | - | - | 44 | - |
| Uralac® P 3475 ^{b)} | - | 54,6 | - | - | - | - | - | - | - | - | - |
| Uralac® P 846 ^{b)} | - | - | 55,7 | 63,5 | 55,7 | 55,6 | - | - | - | - | - |

| **Vernetzungsmittel:** | | | | | | | | | | | |
|---|---|---|---|---|---|---|---|---|---|---|---|
| Vestagon® BF 1540 ^{e)} | 5,9 | - | - | - | - | - | - | - | - | - | - |
| Vestagon® BF 1300 ^{e)} | - | - | - | - | - | - | 5,9 | 5,7 | - | - | - |
| Araldit® PT 910 ^{f)} | - | 4,1 | - | - | - | - | - | - | - | - | - |
| Primid® XL 552 ^{g)} | - | - | 3 | 2,9 | 3 | 3 | - | - | - | - | - |
| Araldit® PT 810 ^{h)} | - | - | - | - | - | - | - | - | - | - | 4,1 |

| **Pigmente:** | | | | | | | | | | | |
|---|---|---|---|---|---|---|---|---|---|---|---|
| Titan Rutil 2310 ⁱ⁾ | 20 | 20 | 20 | 20 | 20 | 20 | 20 | 20 | 20 | 20 | 20 |
| Blanc Fixe® PLV.N ^{j)} | 20 | 20 | 20 | 20 | 20 | 20 | 20 | 20 | 20 | 20 | 20 |

| **Zusatzstoffe:** | | | | | | | | | | | |
|---|---|---|---|---|---|---|---|---|---|---|---|
| Benzoin | 0,6 | 0,6 | 0,6 | 0,6 | 0,6 | 0,6 | 0,6 | 0,6 | 0,6 | 0,6 | 0,6 |
| BYK® 360 P ^{k)} | 0,6 | 0,6 | 0,6 | 0,6 | 0,6 | 0,6 | 0,6 | 0,6 | 0,6 | 0,6 | 0,6 |
| Tinuvin® 144 ^{l)} | 0,7 | - | - | 0,7 | - | - | - | 0,7 | - | - | - |
| Tinuvin® 900 ^{l)} | 1,4 | - | - | 1,4 | - | - | - | 1,4 | - | - | - |
| Worlee Add® 902 ^{m)} | - | - | - | - | - | 0,5 | - | - | - | - | - |

| | | | | | | | | | | | |
|---|---|---|---|---|---|---|---|---|---|---|---|
| a) hydroxylgruppenhaltiger Polyester von der Firma DSM; | | | | | | | | | | | |
| b) carboxylgruppenhaltige Polyester von der Firma DSM; | | | | | | | | | | | |
| c) carboxylgruppenhaltiger Polyester von der Firma Hoechst; | | | | | | | | | | | |
| d) Epoxidharz der Firma Ciba; | | | | | | | | | | | |
| e) uretdiongruppenhaltige verkappte Polyisocyanate auf Isophoron-Basis der Firma Hüls; | | | | | | | | | | | |
| f) Gemisch von Terephthal- und Isophthalsäuerediglycidylester der Firma Ciba; | | | | | | | | | | | |
| g) Tetrakis(beta-hydroxyethyl)adipinsäurediamid der Firma DSM; | | | | | | | | | | | |
| h) TGIC der Firma Ciba; | | | | | | | | | | | |
| i) Titandioxid-Pigment der Firma Kronos Internaional; | | | | | | | | | | | |
| j) Bariumsulfat-Pigment der Firma Sachtleben; | | | | | | | | | | | |
| k) Verlaufmittel der Firma Byk Chemie; | | | | | | | | | | | |
| l) Lichtschutzmittel der Firma Ciba Specialty Chemicals; | | | | | | | | | | | |
| m) Verlaufmittel der Firma Worlee; | | | | | | | | | | | |

### Herstellbeispiel 5

### Die Herstellung von Mehrschichtlackierungen des Aufbaus Pulverlackierung/Klarlackierung

Herstellbeispiel 3 wurde wiederholt, nur daß anstelle der Pulverlacke der Tabelle 1 diejenigen der Tabelle 3 verwendet wurden und daß ein anderer handelsüblicher konventioneller Zweikomponentenklarlack der Firma BASF Coatings AG eingesetzt wurde.

### Beispiele 5 bis 12 und Vergleichsversuche V3 bis V5

### Witterungsbeständigkeit der in erfindungsgemäßer Weise hergestellten Mehrschichtlackierungen (Beispiele 5 bis 12) und der in herkömmlicher Weise hergestellten Mehrschichtlackierungen (Vergleichsversuche V11 bis V13)

Die Witterungsstabilität der Prüftafeln des Herstellbeispiels 5 wurde unmittelbar (Serie A) und nach der zusätzlichen 240-stündigen Exposition im SSK (Serie B) nach der zweijährigen Freibewitterung in Jacksonville/Florida anhand der Haftfestigkeit in der Gitterschnittprüfung nach DIN ISO 2409: 1994-10 ermittelt.

Die Ergebnisse finden sich in der Tabelle 4.

Sie zeigen, daß die in erfindungsgemäßer Verfahrensweise hergestellten Mehrschichtlackierungen der Beispiele 5 bis 12 eine Witterungsstabilität wie die der Mehrschichtlackierung des Vergleichsversuchs V5 (TGIC-haltige Rezeptur) aufweisen und somit eine Alternative hierzu bieten. Außerdem weisen die Mehrschichtlackierungen der Beispiele 6 bis 12 eine außerordentlich hohe Haftung zwischen Pulverlackierung und Klarlackierung auf, so daß es nur an der Schichtgrenze ETL/Pulverlackierung zu einer Enthaflung kommt. Die entsprechenden Gitterschnittwerte beziehen sich daher auf diese Enthaftung an dieser Schichtgrenze.

Im Gegensatz dazu kam es bei dem Vergleichsversuch V3 bereits während der Bewitterung und bei dem Vergleichsversuch V4 bei der Gitterschnittprüfung zu einer nahezu vollständigen oder vollständigen Enthaftung zwischen Pulverlackierung und Klarlackierung.

**Tabelle 4:**

| **Die Witterungsbeständigkeit der in erfindungsgemäßer Weise (Beispiele 5 bis 12) und der in nicht erfindungsgemäßer Weise (Vergleichsversuche V3 bis V5) hergestellten Mehrschichtlackierungen** | | | | | | | | | | | |
|---|---|---|---|---|---|---|---|---|---|---|---|
| | **Gitterschnittprüfung (Note Gt0 - Gt5):** | | | | | | | | | | |
| **Beispiele Nr.:** | **5** | **6** | **7** | **8** | **9** | **10** | **11** | **12** | | | |
| **Vergleichsver- suche Nr.:** | | | | | | | | | **V3** | **V4** | **V5** |
| **A** | Gt0 | Gt1 | Gt1 | Gt1 | Gt2 | Gt2 | Gt2 | Gt1-2 | X) | Y) | Gt0 |
| **B** | Gt0 | Gt4 | Gt5 | Gt5 | Gt5 | Gt5 | Gt4 | Gt2 | X) | Y) | G0 |
| X) Der Klarlack platzte bereits bei der Bewitterung in Florida ab; Y) Der Klarlack enthaftete bei der Gitterschnittprüfung. | | | | | | | | | | | |

## Patentansprüche

1. Verfahren zur Herstellung farb- und/oder effektgebender Mehrschichtlackierungen auf Kraftfahrzeugkarosserien oder Teilen hiervon (Substrate), bei dem man
(I) einen pigmentierten Pulverlack auf die Substrate appliziert,
(II) die resultierende Pulverlackschicht partiell oder vollständig härtet,
(III) die Pulverlackschicht oder die Pulverlackierung mit einem Unidecklack, einem Basislack und einem Klarlack oder einem Klarlack überschichtet, wonach man
(IV) die resultierenden Schichten jeweils für sich alleine oder gemeinsam mit anderen Schichten (Naß-in-naß-Verfahren) härtet,
**dadurch gekennzeichnet, daß** der Pulverlack
(A) mindestens einen carboxylgruppenhaltigen Polyester als Bindemittel und
(B) mindestens einen Glycidylester einer aromatischen oder einer gesättigten oder ungesättigten cycloaliphatischen Dicarbonsäure und/oder mindestens ein N,N,N',N'-Tetrakis(beta-hydroxyalkyl)-alkandicarbonsäurediamid als Vernetzungsmittel oder
(A) mindestens einen hydroxylgruppenhaltigen Polyester als Bindemittel und
(B) mindestens ein intern blockiertes Uretdion eines Diisocyanats als Vernetzungsmittel
enthält.

2. Verfahren nach Anspruch 1, **dadurch gekennzeichnet, daß** die aromatische Dicarbonsäure Terephthalsäure oder Isophthalsäure ist.

3. Verfahren nach Anspruch 1, **dadurch gekennzeichnet, daß** man als N,N,N',N'-Tetrakis(beta-hydroxyalkyl)-alkandicarbonsäurediamid N,N,N',N'-Tetrakis(beta-hydroxyethyl)-alkandicarbonsäurediamid verwendet.

4. Verfahren nach Anspruch 3, **dadurch gekennzeichnet, daß** man als N,N,N',N'-Tetrakis(beta-hydroxyethyl)-alkandicarbonsäurediamid N,N,N',N'-Tetrakis(beta-hydroxyethyl)-adipinsäurediamid verwendet.

5. Verfahren nach Anspruch 1, **dadurch gekennzeichnet, daß** die beiden Isocyanatgruppen des Diisocyanats eine unterschiedliche Reaktivität aufweisen.

6. Verfahren nach Anspruch 5, **dadurch gekennzeichnet, daß** die eine Isocyanatgruppe an einen Alkylrest und die andere Isocyanatgruppe an einen Cycloalkylrest gebunden ist.

7. Verfahren nach Anspruch 6, **dadurch gekennzeichnet, daß** das Diisocyanat Isophorondiisocyanat ist.

8. Verfahren nach einem der Ansprüche 1 bis 7, **dadurch gekennzeichnet, daß** man die pigmentierte Pulverlackschicht (II) vor dem Verfahrensschritt (III)
1. entweder aufschmilzt und härtet, wodurch die Pulverlackierung resultiert; oder
2. aufschmilzt und gar nicht oder nur partiell härtet oder
3. keiner weiteren Nachbehandlung unterwirft.

9. Verfahren nach Anspruch 8, **dadurch kennzeichnet, daß** man die Pulverlackschicht (II) aufschmilzt und gemeinsam mit einer auf dem Substrat befindlichen Elektrotauchlackschicht (ETL) sowie gegebenenfalls mit mindestens einer weiteren Schicht härtet.

10. Verfahren nach Anspruch 8 oder 9, **dadurch kennzeichnet, daß** man im Verfahrensschritt (IV)
1. die Uniddecklackschicht für sich alleine oder gemeinsam mit der Pulverlackschicht,
2. die Basislackschicht und die Klarlackschicht nacheinander für sich alleine, die Basislackschicht gemeinsam mit der Klarlackschicht, die Basislackschicht gemeinsam mit der Pulverlackschicht und anschließend die Klarlackschicht für sich alleine oder die Basislackschicht gemeinsam mit der Pulverlackschicht und der Klarlackschicht sowie
3. die Klarlackschicht für sich alleine oder gemeinsam mit der Pulverlackschicht härtet.

11. Verfahren nach einem der Ansprüche 1 bis 10, **dadurch gekennzeichnet, daß** man die Klarlackschicht oder die Klarlackierung noch mit einem hochkratzfesten Sealer überschichtet, wonach man den Sealer gemeinsam mit der Klarlackschicht sowie gegebenenfalls mindestens einer weiteren darunterliegenden Schicht oder für sich alleine härtet.

## Claims

1. Process for producing multicoat colour and/or effect finishes on motor vehicle bodies or parts thereof (substrates), in which
(I) a pigmented powder coating material is applied to the substrates,
(II) the resulting powder coating film is partly or fully cured,
(III)the powder coating film or powder coating is overcoated with a solid-colour topcoat, with a basecoat and a clearcoat, or with a clearcoat, after which
(IV) the resulting films are cured in each case individually or together with other films (wet-on-wet technique),
**characterized in that** the powder coating material
(A) comprises at least one carboxyl-containing polyester as binder and
(B) comprises at least one glycidyl ester of an aromatic or of a saturated or unsaturated cycloaliphatic dicarboxylic acid and/or at least one N,N,N',N'-tetrakis(beta-hydroxyalkyl)alkanedicarboxamide as crosslinking agent, or
(A) comprises at least one hydroxyl-containing polyester as binder and
(B) comprises at least one internally blocked uretdione of a diisocyanate as crosslinking agent.

2. Process according to Claim 1, **characterized in that** the aromatic dicarboxylic acid is terephthalic acid or isophthalic acid.

3. Process according to Claim 1, **characterized in that** the N,N,N',N'-tetrakis(betahydroxyalkyl)alkanedicarboxamide used is N,N,N',N'-tetrakis(beta-hydroxyethyl)alkanedicarboxamide.

4. Process according to Claim 3, **characterized in that** the N,N,N',N'-tetrakis(beta-hydroxyethyl)alkanedicarboxamide used is N,N,N',N'-tetrakis(beta-hydroxyethyl)adipamide.

5. Process according to Claim 1, **characterized in that** the two isocyanate groups of the diisocyanate differ in reactivity.

6. Process according to Claim 5, **characterized in that** one isocyanate group is attached to an alkyl radical and the other isocyanate group is attached to a cycloalkyl radical.

7. Process according to Claim 6, **characterized in that** the diisocyanate is isophorone diisocyanate.

8. Process according to any of Claims 1 to 7, **characterized in that** prior to process step (III) the pigmented powder coating film (II)
1. is either melted and cured, to give the powder coating; or
2. is melted and not cured at all, or is only part-cured, or
3. is not subjected to any further aftertreatment.

9. Process according to Claim 8, **characterized in that** the powder coating film (II) is melted and is cured together with an electrodeposition coat (EDC) present on the substrate and, if appropriate, with at least one further coat.

10. Process according to Claim 8 or 9, **characterized in that** in process step (IV)
1. the solid-colour topcoat is cured on its own or together with the powder coating film,
2. the basecoat film and the clearcoat film are cured individually in succession, the basecoat film is cured together with the clearcoat film, the basecoat film is cured together with the powder coating film and subsequently the clearcoat film is cured on its own, or the basecoat film is cured together with the powder coating film and the clearcoat film, and
3. the clearcoat film is cured on its own or together with the powder coating film.

11. Process according to any of Claims 1 to 10, **characterized in that** the clearcoat film or clearcoat is also overcoated with a high scratch resistance sealer, after which the sealer is cured together with the clearcoat film and, if appropriate, with at least one further, underlying coat, or on its own.

## Revendications

1. Procédé pour la production de revêtements de peinture multicouches colorants et/ou à effet sur des carrosseries d'automobiles ou des parties de celles-ci (subjectiles), dans lequel
(I) on applique sur le subjectile une peinture en poudre pigmentée,
(II) la couche de peinture en poudre résultante est durcie partiellement ou totalement
(III) on revêt la couche de peinture en poudre ou le revêtement de peinture en poudre avec un vernis ou avec une peinture de finition universelle, une peinture de fond et un vernis, à la suite de quoi
(IV) les couches résultantes sont durcies chacune seule ou conjointement avec d'autres couches (procédé humide-sur-humide),
**caractérisé en ce que** la peinture en poudre contient
(A) au moins un polyester contenant des groupes carboxy, en tant que liant et
(B) au moins un ester glycidylique d'un acide dicarboxylique aromatique ou d'un acide dicarboxylique cycloaliphatique saturé ou insaturé et/ou au moins un diamide d'acide N,N,N',N'-tétrakis(bêta-hydroxyalkyl)-alcanedicarboxylique en tant qu'agent de réticulation ou
(A) au moins un polyester contenant des groupes hydroxy, en tant que liant et
(B) au moins une uretdione internément bloquée d'un diisocyanate en tant qu'agent de réticulation.

2. Procédé selon la revendication 1, **caractérisé en ce que** l'acide dicarboxylique aromatique est l'acide téréphtalique ou l'acide isophtalique.

3. Procédé selon la revendication 1, **caractérisé en ce qu'**on utilise en tant que diamide d'acide N,N,N',N'-tétrakis(bêta-hydroxyalkyl)-alcanedicarboxylique le diamide d'acide N,N,N',N'-tétrakis(bêta-hydroxyéthyl)-alcanedicarboxylique.

4. Procédé selon la revendication 3, **caractérisé en ce qu'**on utilise en tant que diamide d'acide N,N,N',N'-tétrakis(bêta-hydroxyalkyl)-alcanedicarboxylique le diamide d'acide N,N,N',N'-tétrakis(bêta-hydroxyéthyl)-adipique.

5. Procédé selon la revendication 1, **caractérisé en ce que** les deux groupes isocyanate du diisocyanate présentent une réactivité différente.

6. Procédé selon la revendication 5, **caractérisé en ce qu'**un groupe isocyanate est lié à un radical alkyle et l'autre groupe isocyanate est lié à un radical cycloalkyle.

7. Procédé selon la revendication 6, **caractérisé en ce que** le diisocyanate est l'isophorone-diisocyanate.

8. Procédé selon l'une quelconque des revendications 1 à 7, **caractérisé en ce que**, avant l'étape (III) du processus, la couche de peinture en poudre (II) pigmentée
1. est soit fondue et durcie, de sorte qu'il en résulte le revêtement de peinture en poudre ; soit
2. fondue et n'est pas du tout durcie ou est seulement partiellement durcie ou
3. n'est soumise à aucun autre post-traitement.

9. Procédé selon la revendication 8, **caractérisé en ce qu'**on fait fondre la couche de peinture en poudre (II) et on la fait durcir conjointement avec une couche de peinture par électrodéposition (PED) se trouvant sur le subjectile ainsi qu'éventuellement avec au moins une autre couche.

10. Procédé selon la revendication 8 ou 9, **caractérisé en ce que** dans l'étape (IV) du processus
1. la couche de peinture de finition universelle est durcie seule ou conjointement avec la couche de peinture en poudre,
2. la couche de peinture de fond et la couche de vernis sont durcies seules l'une après l'autre, la couche de peinture de fond est durcie conjointement avec la couche de vernis, la couche de peinture de fond est durcie conjointement avec la couche de peinture en poudre et ensuite la couche de vernis est durcie seule ou la couche de peinture de fond est durcie conjointement avec la couche de peinture en poudre et la couche de vernis, ainsi que
3. la couche de vernis est durcie seule ou conjointement avec la couche de peinture en poudre.

11. Procédé selon l'une quelconque des revendications 1 à 10, **caractérisé en ce qu'**on revêt encore la couche de vernis ou le revêtement de peinture avec une peinture isolante (sealer) très résistante à la rayure, à la suite de quoi on fait durcir le sealer seul ou conjointement avec la couche de vernis ainsi qu'éventuellement avec au moins une autre couche sous-jacente.
